(19) **Europäisches Patentamt**

**European Patent Office**

**Office européen des brevets**

(11) **EP 0 718 955 A2**

(12) **EUROPÄISCHE PATENTANMELDUNG**

(43) Veröffentlichungstag:
26.06.1996 Patentblatt 1996/26

(51) Int. Cl.⁶: **H02K 1/16**

(21) Anmeldenummer: 95119518.9

(22) Anmeldetag: **11.12.1995**

(84) Benannte Vertragsstaaten:
**CH DE FR GB IT LI SE**

(30) Priorität: **23.12.1994 DE 4446432**

(71) Anmelder: **SIEMENS AKTIENGESELLSCHAFT
D-80333 München (DE)**

(72) Erfinder: **Auinger, Herbert, Dr.
D-90473 Nürnberg (DE)**

(54) **Ständer für eine hochpolige mehrphasige elektrische Maschine**

(57)     Die Erfindung bezieht sich auf einen Ständer für eine hochpolige mehrphasige elektrische Maschine, deren Luftspaltfeld einen rechteckförmigen oder zumindest annähernd rechteckförmigen Verlauf aufweist. Eine wesentlich kürzere Ausbildung der Wickelköpfe und der Wegfall von gesonderten Stoßfugenspulen ist dadurch möglich, daß der Ständer in mehrere Segmente unterteilt ist, wobei sich die auf jedem Segment angeordnete mehrphasige Wicklung über eine ganzzahlige Anzahl von Polpaaren erstreckt, daß die Nutzahl q pro Pol und Phase gleich oder kleiner 1 ist und daß ferner die Nutteilung pro Segment zumindest teilweise von der regulären Nutteilung abweicht.

EP 0 718 955 A2

Printed by Rank Xerox (UK) Business Services
2.12.4/3.4

## Beschreibung

Die Erfindung betrifft einen Ständer für eine hochpolige mehrphasige elektrische Maschine, deren Luftspaltfeld einen rechteckförmigen oder zumindest annähernd rechteckförmigen Verlauf aufweist.

Solche Maschinen sind beispielsweise langsam laufende Antriebsmotoren für Rohrmühlen und Computertomographen sowie Generatoren für Wind- und Wasserkraftanlagen, die zur Erregung Permanentmagnete aufweisen.

Bei hochpoligen Maschinen ergeben sich insbesondere im Wickelkopfbereich Probleme, wenn viele Überkreuzungen erforderlich sind, die zu langen Wickelköpfen führen. Außerdem weisen hochpolige Maschinen einen großen Durchmesser auf, so daß der Ständer beispielsweise aus Transportgründen nicht als Ganzes gefertigt werden kann, sondern in mehrere Segmente zerlegt werden muß. Der Zusammenbau erfolgt dann am Aufstellort, wobei an den Stoßstellen der einzelnen Segmente besondere Stoßfugenspulen eingefügt werden müssen.

Der Erfindung liegt die Aufgabe zugrunde, einen Ständer für eine hochpolige mehrphasige elektrische Maschine so auszubilden, daß die Wickelköpfe wesentlich kürzer ausgeführt werden können und daß der Zusammenbau der einzelnen Segmente ohne nachträgliches Einfügen von gesonderten Wicklungsspulen möglich ist.

Die Lösung der gestellten Aufgabe gelingt durch die im Kennzeichen des Anspruchs 1 angegebenen Merkmale. Durch die Ausbildung der Wicklung mit einer ganzzahligen Anzahl von Polpaaren je Segment und die Wahl einer Lochzahl q gleich oder kleiner 1, ergibt sich ein in sich abgeschlossenes Ständerbauteil, so daß beim Zusammenbau der einzelnen Segmente keine übergreifenden Wicklungsteile (Stoßfugenspulen) zwischen den Segmenten erforderlich sind. Aufgrund der gewählten Lochzahl q gleich oder kleiner 1 ergibt sich eine Vereinfachung der Wicklung insgesamt, da diese als Einschichtwicklung ausgeführt werden kann. Mit q kleiner 1, z.B. q gleich 1/2, lassen sich sehr kurze Wickelköpfe erzielen. Durch die von der regulären Nutteilung abweichende Nutteilung wird eine sich von Pol zu Pol verändernde Phasenlage der induzierten Spannung erreicht, so daß trotz der Nutzahl q gleich oder kleiner 1 auch bei einem rechteckförmigen oder annähernd rechteckförmigen Luftspaltfeld die gewünschte Sinusform der induzierten Spannung bzw. Gleichförmigkeit des Drehmomentes erzielt wird.

Wird die Nutteilung geringfügig kleiner als die aus der Polteilung, der Phasenzahl und der Lochzahl resultierende reguläre Nutteilung ausgeführt, so lassen sich Leernuten in den einzelnen Segmenten bzw. Lücken zwischen den Segmenten vollständig vermeiden. Außerdem ergeben sich an den Enden der Segmente dickere Endzähne mit einer höheren mechanischen Festigkeit. Dies ist für das Bestücken der Segmente mit den Wicklungsspulen und auch für den späteren Zusammenbau der Segmente von Vorteil.

Winkelunterschiede zwischen den einzelnen Phasenspannungen lassen sich dadurch vermeiden, daß jedes Segment Teilbereiche mit unterschiedlicher Nutteilung aufweist, wobei zumindest in einem bei allen Segmenten an gleicher Stelle liegenden Teilbereich, welcher für eine dreiphasige Wicklung bei q gleich 1/2 mindestens drei Nuten bzw. bei q gleich 1 mindestens sechs Nuten oder jeweils einem ganzzahligen Vielfachen davon entspricht, die Nutteilung regulär und in den übrigen Bereichen kleiner als die reguläre Nutteilung ausgeführt ist.

Nachfolgend wird die Erfindung näher erläutert. Es wird beispielsweise von einer 36poligen, dreiphasigen Maschine ausgegangen, deren Ständer in drei sich jeweils über 120° räumlich erstreckende Segmente unterteilt ist. Damit entfallen auf jedes Segment 12 Pole. Die Lochzahl q, welche die Nuten pro Pol und Phase angibt, ist gleich 1 gewählt. Die reguläre Nutteilung $t_N$ ergibt sich bei einer solchen Maschine zu $t_S/p.m$, wobei $t_S$ der Bogenlänge des Segmentes, p der Polzahl des Segmentes und m der Phasenzahl der Maschine entspricht. Im konkreten Fall wäre somit die reguläre Nutteilung $t_N = t_S / 12 . 3 = t_S / 36$. Statt einer regulären Teilung für 36 Nuten wird für das entsprechende Segment beispielsweise eine fiktive Nutzahl von 37 zugrundegelegt und daraus die entsprechende Nutteilung ermittelt. Die Nutteilung kann auch entsprechend einer nicht ganzzahligen fiktiven Nutzahl, z.B. 36,4 vorgenommen werden. Tatsächlich ausgeführt werden aber nur die benötigten 36 Nuten/Segment. Damit ist die tatsächliche Nutteilung geringfügig kleiner als die reguläre Nutteilung. Aufgrund dieser Maßnahme ergeben sich hinsichtlich der mechanischen Ausführung der Segmente breitere Endzähne. Elektrisch ergibt sich durch die Abweichung der tatsächlichen Nutteilung von der regulären Nutteilung von Pol zu Pol eine Phasenverschiebung der in der Wicklung induzierten Spannung, so daß insgesamt trotz des rechteckförmigen Luftspaltfeldes und einer Nutzahl q gleich oder kleiner 1 eine gute Sinusform der induzierten Spannung erreicht wird. Bei diesem Ausführungsbeispiel verhält sich die Wicklungsanordnung ähnlich wie eine solche mit einer Nutzahl von q gleich 6 Spulen pro Pol und Phase. Bei einer kleiner als die reguläre Nutteilung gewählten Nutteilung ergibt sich eine volle elektrische Ausnutzung des Ständersegmentes. Dies ist bei einer gegenüber der regulären Nutteilung größer gewählten Nutteilung nicht der Fall.

Um die bei einer solchen Ausführung der Ständerwicklung insgesamt auftretende Phasenwinkelungssymmetrien, d.h. Abweichungen von 360°/m = 120° für m = 3, zwischen den einzelnen Phasenspannungen zu beseitigen, werden bei einer dreiphasigen Wicklung in einem Teilbereich jedes Segmentes, wobei die Lage dieses Teilbereiches bei allen Segmenten gleich sein muß, bei einer Lochzahl q = 1/2 mindestens drei Nuten oder bei einer Lochzahl q = 1 mindestens sechs Nuten mit regulärer Nutteilung ausgeführt. Es kann auch jeweils ein ganzzahliges Vielfache von drei oder sechs Nuten mit regulärer Nutteilung ausgeführt werden. Durch die in den mit regulärer Nutteilung ausgeführten Nuten liegenden Wicklungsspulen wird ein exakt gleicher Winkel zwischen den einzelnen Phasenspannungen vorgegeben.

**Patentansprüche**

1. Ständer für eine hochpolige mehrphasige elektrische Maschine, insbesondere mit permanentmagneterregtem Läufer, deren Luftspaltfeld einen rechteckförmigen oder zumindest annähern rechteckförmigen Verlauf aufweist,
   **dadurch gekennzeichnet,**
   daß der Ständer in mehrere Segmente unterteilt ist, wobei sich die auf jedem Segment angeordnete mehrphasige Wicklung über eine ganzzahlige Anzahl von Polpaaren erstreckt, daß die Lochzahl q = Zahl der Nuten pro Pol und Phase gleich oder kleiner 1 ist, daß die Nutteilung pro Segment zumindest teilweise von der aus der Polteilung der Phasenzahl und der Lochzahl resultierenden regulären Nutteilung abweicht.

2. Ständer nach Anspruch 1,
   **dadurch gekennzeichnet,**
   daß die Nutteilung geringfügig kleiner als die reguläre Nutteilung ausgeführt ist und daraus resultierend dickere Randzähne vorgesehen sind.

3. Ständer nach Anspruch 1,
   **dadurch gekennzeichnet,**
   daß jedes Segment Teilbereiche mit unterschiedlicher Nutteilung aufweist, wobei zumindest in einem bei allen Segmenten an gleicher Stelle liegenden Teilbereich, welcher für eine dreiphasige Wicklung bei q = 1/2 mindestens drei Nuten bzw. bei q = 1 mindestens sechs Nuten oder jeweils einem ganzzahligen Vielfachen von drei oder sechs Nuten entspricht, die Nutteilung regulär und in den übrigen Bereichen der Segmente kleiner als die reguläre Nutteilung ausgeführt ist.